# EUROPEAN PATENT APPLICATION

(11) **EP 3 043 313 A1**
(43) Date of publication of application: **13.07.2016**
(21) Application number: 14842007.8
(22) Date of filing: 04.09.2014
(51) Int. Cl.: G06T 5/50

(54) **JPEG PICTURE COMPOSITE METHOD AND METHOD AND APPARATUS FOR SUPERIMPOSING OSD INFORMATION**

(30) Priority: 05.09.2013 CN 201310399912
(71) Applicant: Zhejiang Uniview Technologies Co. Ltd., Hangzhou, Zhejiang 310051 (CN)
(72) Inventor: WU, Canyi, Hangzhou Zhejiang 310051 (CN)
(74) Representative: Grünecker Patent- und Rechtsanwälte PartG mbB
(86) International application number: PCT/CN2014/085951
(87) International publication number: WO 2015/032339

(57) **Abstract**

A JPEG picture composite method, and a method and apparatus for superimposing OSD information. The composite method comprises: performing entropy decoding, AC/DC coefficient decoding, inverse DC prediction and inverse quantization on the JPEG bit data streams of a first picture and a second picture; then performing DCT coefficient synthesis in an order of JPEG raster scanning according to the picture splicing mode; and performing quantization, DC prediction, AC/DC coefficient coding and entropy coding to form the JPEG bit data stream of a composite picture. As for the superimposed OSD information, only an area requiring the superimposition of OSD information undergoes IDCT change, a DCT coefficient is obtained by means of DCT transform after the OSD information is superimposed in a YUV plane, and this DCT coefficient as well as the DCT coefficient of a non-superimposed area are subject to DCT coefficient synthesis. The method and apparatus have no need of conducting IDCT transform and DCT transform on the entire JPEG picture, calculation amount is less and composite efficiency is high.

## Description

### Technical Field

The disclosure relates to the field of image processing technology in particular to a method for synthesizing a JPEG (Joint Photographic Experts Group) images and a method and apparatus for superimposing OSD information onto a JPEG image.

### Background

In the electronic police subsystem and the block port monitoring subsystem of an Intelligent Transportation System (ITS), the front end equipment completely records the process of regulation violation and the enlarged license plate by capturing images of the vehicles that violate regulation in the intersections.

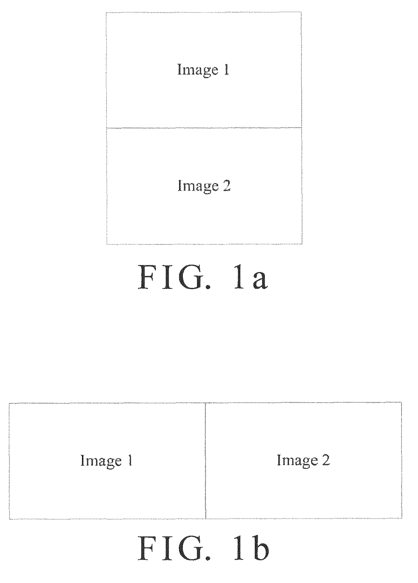

Usually, the system synthesizes a few images of a particular vehicle into one image with high resolution for saving. A single image and a synthetic image captured by the front end equipment are in JPEG (Joint Photographic Experts Group) format. Depending on the applications, the modes of synthesizing images are different. FIG. 1a-FIG.3b are the examples of synthesizing two images, three images and four images, respectively. FIG. 1 is an example of synthesizing two JPEG Images into one image. FIG. 1a is an example of synthesizing two images in vertical direction. The width of the two images is identical, and the width is equal to the width of the synthetic image. FIG. 1 b is an example of synthesizing two images in horizontal direction. The height of the two images is identical, and the height is equal to the height of the synthetic image.

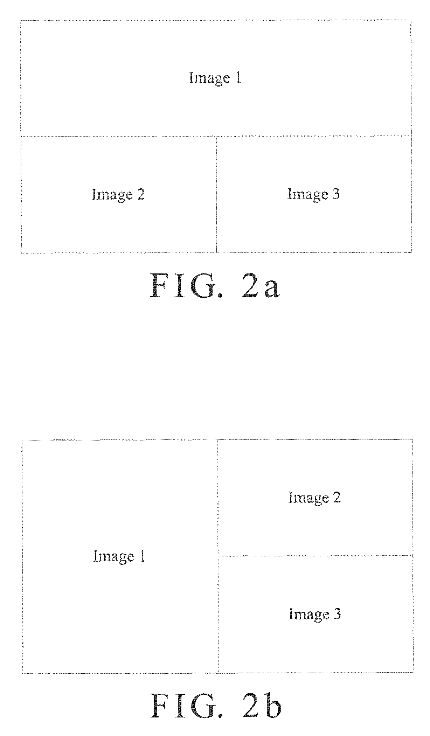

FIG. 2 is an example of synthesis of three images. In FIG. 2a, image 2 and image 3 have identical height. Image 2 and image 3 are first synthesized in horizontal direction, and the resulting image is then synthesized with image 1 in vertical direction. In FIG. 2b, image 2 and image 3 have identical width. Image 2 and image 3 are first synthesized in vertical direction, and the resulting image is then synthesized with image 1 in horizontal direction.

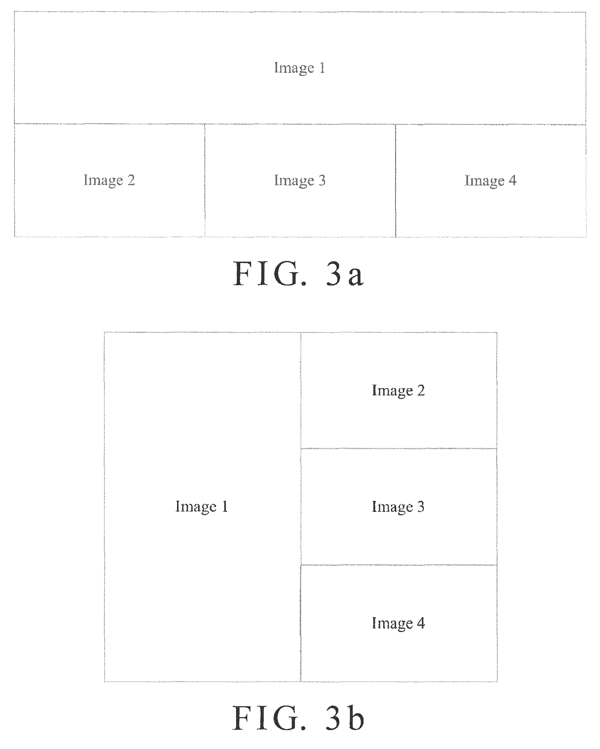

FIG. 3 is an example of synthesizing four images. In FIG. 3a, image 2, image 3 and image 4 have identical height. They are first synthesized in horizontal direction, and the resulting image is then synthesized with image 1 in vertical direction. In FIG. 3b, image 2, image 3 and image 4 have identical width. Image 2, image 3 and image 4 are synthesized in vertical direction, and the resulting image is then synthesized with image 1 in horizontal direction.

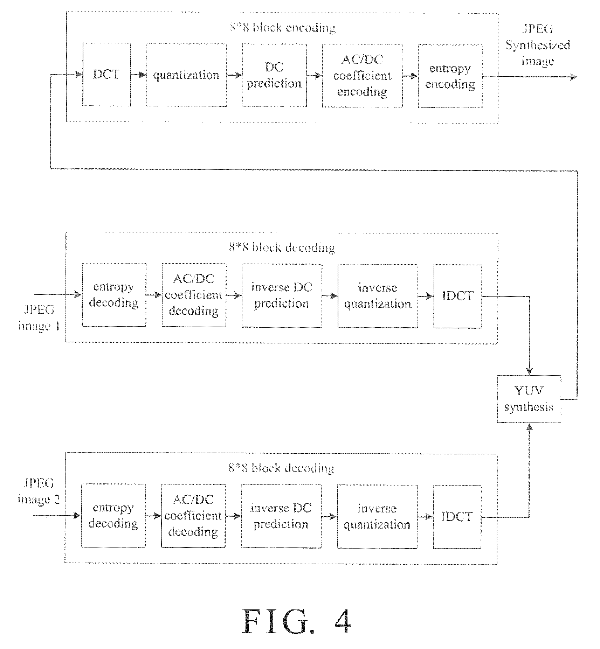

In existing technologies for synthesizing JPEG images, the JPEG images to be synthesized are decoded respectively and a YUV format of each image can be obtained. Each YUV format image is then synthesized according to the mode of synthesizing, and after the synthesis the resulting image is encoded to JPEG format again. In the example of synthesizing two JPG images, as shown in FIG. 4, the two JPEG images are respectively decoded into YUV images according to the JPEG standard decoding process which includes entropy decoding → Alternating Current (AC)/Direct Current (DC) coefficient decoding → inverse DC prediction → inverse quantization → Inverse Discrete Cosine Transform (IDCT). According to the mode of synthesizing, the YUV images are synthesized. After the synthesis has been completed, a synthesized JPEG images is obtained according to the JPEG standard coding process which includes Discrete Cosine Transform (DCT) → quantization → DC prediction → AC/DC coefficient encoding → entropy encoding.

Since the resolution of images to be synthesized is normally 200 or 500-megapixels, the synthesis of such two images requires 400 or 1000 megapixel decoding and encoding operations. The synthesis of four images requires 800 or 2000 megapixel decoding and encoding operations. Therefore, the computation cost of JPEG decoding and encoding is very high. Running the coding and decoding on regular CPUs of back end servers is a huge performance bottleneck. At the same time, the process of decoding and then encoding will also reduce the quality of the resulting image.

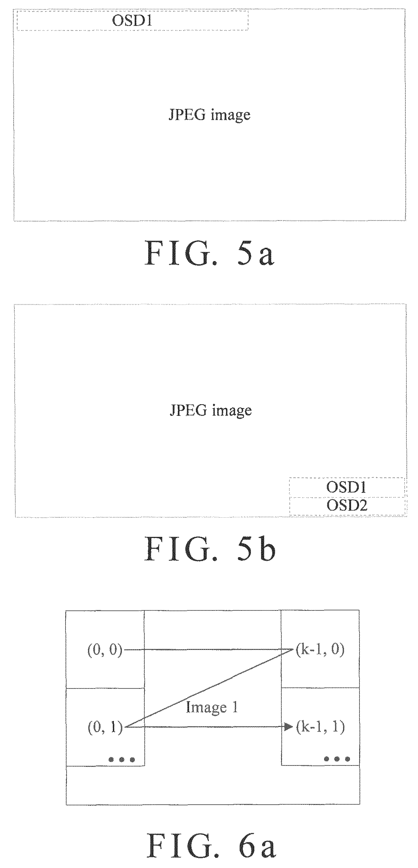

In the electronic police subsystem and the block port monitoring subsystem, in addition to image synthesis some OSD (On Screen Display) information may be required to add to the synthesized images, such as OSD information for improving results of intelligent recognition, OSD information of time or location, and so on. The information is often superimposed to the images after the images are JPEG-encoded, as shown by OSD1 in FIG. 5a. In addition, in the video monitoring system, according to the national standard, when subordinate departments report a JPEG image, which is acquired in the local administrated area, to superior departments, they normally add the OSD information of the local region to the image. As shown in FIG. 5b, the JPEG image has already contained the OSD2 information. When the JPEG image is being uploaded to superior departments, the OSD1 information may be required to add to the image. In order to add the OSD information after the JPEG image is synthesized, the JPEG image is decoded again according to the standard of decoding process, and then the OSD information is superimposed in the resulting YUV plane. After superimposing the OSD information, the image is encoded according to the standard JPEG encode process. Therefore, the JPEG image with the OSD information added is obtained. Such an existing OSD superimposing scheme decodes the whole image and then encodes the resulting image, not only requiring high computational resources but also reducing quality of the final image due to the decoding and encoding operations.

### Summary

The purpose of this disclosure is to overcome the shortcomings of high computation cost and low image quality resulted from existing technologies for synthesizing JPEG images, by providing a JPEG image synthesizing method, and OSD information superimposing method and apparatus. The method may reduce the computation cost for synthesizing image.

In order to achieve the aforementioned purpose, the disclosure provides the following technical schemes.

A method for synthesizing JPEG images is presented. The method is used to synthesize a first image and a second image and may include the following processes.

The JPEG bit streams of the first and the second images are decoded through entropy decoding and AC/DC coefficient decoding, and then processed by inverse DC prediction and inverse quantization to obtain DCT coefficients.

The DCT coefficients are synthesized according to a mode for stitching image (hereafter, may also be referred to as "image stitching mode").

The synthesized DCT coefficients are quantized and then processed through DC prediction, AC/DC coefficient encoding and entropy encoding to form the bit stream of a synthesized image.

Further, the aforementioned method for synthesizing JPEG images may also include the following processes.

The header of the first image or the second image is retained as the header of the final synthesized image. The height and width information of the images in the header are modified as the height and width information of the synthesized image. In the intelligence transportation system (ITS), the formats of images are generally identical and the header information of the JPEG images is also generally identical. While synthesizing images, the header of one of the image files is retained as the header of the synthesized image file.

Furthermore, based on the aforementioned image stitching mode, the DCT coefficients are synthesized. In particular, based on the image stitching mode, the DCT coefficients of the first image and the second image are arranged according to the order of JPEG raster scan. The image stitching modes include a horizontal stitching mode and a vertical stitching mode. According to different image stitching modes, the DCT coefficients are arranged based on the order of JPEG raster scan. In the vertical stitching mode, the DCT coefficients of the second image are arranged after the last row of the first image. In the horizontal stitching mode, the first half of the n^{th} row of DCT coefficients of the synthesized image is the DCT coefficients of the n^{th} row of the first image, and the second half of the n^{th} row of the DCT coefficients of the synthesized images is the DCT coefficients of the n^{th} row of the second image.

The disclosure also presents a method for superimposing OSD information in JPEG images. The method includes the following processes.

The bit stream of the JPEG image to be superimposed with OSD information is decoded through entropy decoding, AC/DC coefficient decoding, and processed through inverse DC prediction and inverse quantization to obtain the DCT coefficients.

The DCT coefficients for the region of the image that is to be superimposed with the OSD information are extracted. The extracted DCT coefficients are transformed into YUV plane data by IDCT. The YUV plane data are superimposed with the OSD information and the result data are then transformed by DCT.

The DCT coefficients superimposed with OSD information are synthesized with the DCT coefficients of non-superimposed region of the image.

The synthesized DCT coefficients are quantized and processed through DC prediction, AC/DC coefficient encoding and entropy encoding, to form the bit stream of the synthesized image.

The DCT coefficients of the regions that are to be superimposed with the OSD information are extracted from the DCT coefficients of the JPEG image based on the coordinate information of the regions in the image that are to be superimposed with OSD information.

The disclosure also presents a device for synthesizing JPEG images, including a processor and non-volatile memory that stores a plurality of computer instructions. These computer instructions are executed by the processor to cause the processor to perform the following operations:
performing entropy decoding, AC/DC coefficient decoding, inverse DC prediction and inverse quantization on the JPEG bit stream of the first image and the second image to obtain the DCT coefficients.
synthesizing the DCT coefficients according to the image stitching mode;
performing quantization, DC prediction, AC/DC coefficient encoding and entropy encoding on the synthesized DCT coefficients to form the bit stream of a synthesized image.

These computer instructions, when executed by processor, also cause the processor to perform the following operations:
retaining the header of the first image or the second image as the header of the final synthesized image, and modifying the height and width information in the header to the height and width information of the synthesized image.

The disclosure also proposes a device for superimposing OSD information to the JPEG image. The device includes a processor and a non-volatile memory that stores a plurality of computer instructions. When the computer instructions are executed by the processor, they cause the processor to perform the following operations:
processing the bit stream of the JPEG image to be superimposed with OSD information through entropy decoding, the AC/DC coefficient decoding, inverse DC prediction and inverse quantization to obtain the DCT coefficients;
extracting the DCT coefficients of a region in the image that is to be superimposed with the OSD information, transforming the extracted DCT coefficients into YUV plane data by an IDCT, superimposing the OSD information onto the YUV plane data and transforming the result data by a DCT;
synthesizing the DCT coefficients superimposed with OSD information with the DCT coefficients of non-superimposed region of the image;
performing quantization, DC prediction, AC/DC coefficient encoding and entropy encoding on the synthesized DCT coefficients to form a bit stream of a synthesized image.

The DCT coefficients of the region to be superimposed with the OSD information are extracted from the DCT coefficients of the JPEG image based on the coordinate information of the region in the image to be superimposed with OSD information.

The disclosure presents a method and device for synthesizing JPEG images and superimposing OSD information in images. The method performs entropy decoding, AC/DC coefficient decoding, inverse DC prediction and inverse quantization to the bit streams of JPEG images. According to the image stitching mode, the method performs the DCT coefficient synthesis in the plane of the DCT coefficients based on the order of JPEG raster scan. The quantization, DC prediction, and AC/DC coefficient encoding and entropy encoding are then conducted on the DCT coefficients to form the bit streams of the JPEG images. To superimpose information to JPEG images, the JPEG images are decoded through entropy decoding and AC/DC coefficient decoding, and processed by inverse prediction and inverse quantization. Then only the region with the superimposed OSD information is transformed by an IDCT. After the IDCT, the OSD information is superimposed in YUV plane and the intermediate result data is transformed into the DCT coefficients via a DCT. The DCT coefficients are synthesized with the DCT coefficients of non-superimposed region. The synthesized DCT coefficients are quantized, and processed through the DC prediction, AC/DC coefficient encoding and entropy encoding to form the bit stream of the synthesized image. The disclosure synthesizes the images in the plane of the DCT coefficients, and it does not require IDCT and DCT for the whole JPEG image, thereby requiring low computation cost and achieving high synthesis efficiency.

### Brief Description of Drawings

FIG. 1a illustrates a mode of synthesizing two JPEG images in vertical direction.
FIG. 1b illustrates a mode of synthesizing two JPEG images in horizontal direction.
FIG. 2a illustrates a mode of synthesizing three JPEG images in vertical direction.
FIG. 2b illustrates a mode of synthesizing three JPEG images in horizontal direction.
FIG. 3a illustrates a mode of synthesizing four JPEG images in vertical direction.
FIG. 3b illustrates a mode of synthesizing four JPEG images in horizontal direction.
FIG. 4 is a schematic diagram of the encoding and decoding algorithm of existing technologies for synthesizing JPEG image.
FIG. 5a is a schematic diagram of a JPEG image superimposed with the OSD information.
FIG. 5b is a schematic diagram of a JPEG image superimposed with the OSD information.
FIG. 6a is a schematic diagram of the raster scan of JPEG image.
FIG. 6b is a schematic diagram of the raster scan of JPEG images in horizontal stitching mode.
FIG. 6c is a schematic diagram of the raster scan of JPEG images in vertical stitching mode.
FIG. 7 is a flow chart of a JPEG synthesis method according to one example of the present disclosure.
FIG. 8 is a flow chart of implementation method for superimposing OSD information to JPEG image according to one example of the present disclosure.
FIG. 9 is a block diagram of a JPEG synthesis device according to one example of the present disclosure.
FIG. 10 is a hardware block diagram of a device for synthesizing JPEG images and a device for superimposing JPEG images with OSD information according to one example of the present disclosure.

### Detailed Description

The present disclosure will be described in detail in combination with the appended drawings and the examples. However, the following examples are not to limit the present disclosure.

In the JPEG coding standard, all the 8 by 8 pixel blocks (referred to as "pixel block," hereinafter) are coded from left to right, and top to bottom according to raster scanning order. After the DCT, one pixel block forms a DC coefficient and 63 AC coefficients. The DC coefficient and AC coefficient are quantized respectively, then are processed by the DC prediction, AC coefficient encoding and DC coefficient encoding (referred to as "AC/DC coefficient encoding") and finally processed by the entropy encoding to form bit stream. The DC prediction is calculating the residual of the DC coefficient quantization value of the pixel block (DCₙ) and DC coefficient quantization value of the previous adjacent pixel block (DCₙ₋₁) in the order of raster scanning, namely, diff = DCₙ-DCₙ₋₁. As for the first pixel block in the image, since there is no such an adjacent pixel block before it, the DCT coefficient quantization value of the previous adjacent pixel block takes default value, namely, diff = DC₁-default, where, DC₁ is DC coefficients quantization value of the first pixel block. With respect to the DC coefficient encoding, the DPCM (Differential Pulse Code Modulation) is utilized. With respect to AC coefficient encoding, the RLE (Run-Length Encoding) is used. The JPEG image decoding process is the reverse process of the above-mentioned encoding process. The entropy decoding is conducted first, then the AC coefficient decoding and DC coefficient decoding are conducted, the inverse DC prediction is conducted as following, the AC coefficients and DC coefficients are then inversely quantized respectively, and finally an IDCT is performed. The inverse DC prediction is to calculate the DC coefficient quantization value based on the equation of DCₙ = diff + DCₙ₋₁.

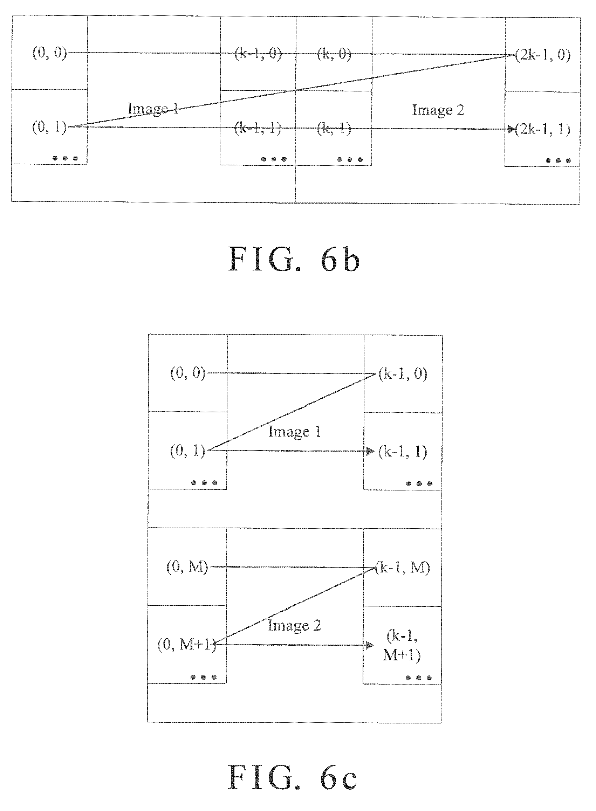

Suppose that the image 1 and image 2 to be synthesized both have K blocks of 8x8 pixel in each row, M blocks of 8x8 pixel in each column, then the raster scan order of image 1 is shown in FIG. 6a. After the two images are stitched, the corresponding raster scan in the horizontal stitching mode is shown in FIG. 6b; the corresponding raster scan in the vertical splicing mode is shown in FIG. 6c.

It should be noted that the images in ITS systems are all saved in JPG format and images are in identical size. However, this disclosure is not limited to stitching of images with an identical size. With respect to the JPEG images in different sizes, the stitching can be achieved by arranging them according to the raster scan order in the stitching mode.

It can be observed that after stitching the order of pixel blocks in image 1 and image 2 in the synthesized image has been changed relative to the order in the original images. The change of pixel block order can lead to a change of the DC coefficient encoding of the pixel block. Therefore, the image stitching can be achieved by re-encoding the DCT coefficients of image pixel block and reforming the JPEG bit stream.

This disclosure is based on the characteristics of image synthesis. The synthesized image can be formed by decoding image 1 and image 2 to be synthesized through entropy decoding and the AC and DC coefficient decoding, by continuing the process of the images via inverse DC prediction, inverse quantization, and synthesizing the images in the DCT coefficient plane, quantizing the resulting data, conducting DC prediction, AC/DC coefficient encoding and entropy encoding on the resulting data.

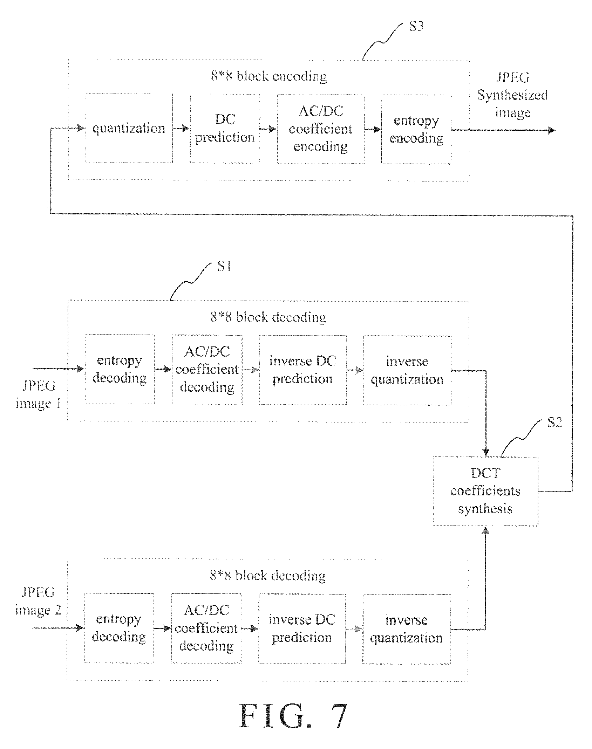

FIG. 7 is flowchart of a method for synthesizing JPEG images according to one example of the present disclosure.

In block S1, The JPEG bit stream of the image 1 and image 2 is decoded through entropy decoding and AC/DC coefficient decoding, and then processed by inverse DC prediction and inverse quantization to obtain the DCT coefficients.

Images in ITS system are all saved in JPEG format. The saved JPEG images are encoded JPEG bit stream by entropy encoding. Therefore, to synthesize image 1 and image 2, the two images are decoded through entropy decoding first. The traditional method is to conduct a standard complete JPEG decoding on the image 1 and image 2. Then the two images are synthesized on the YUV plane. In contrast, the present disclosure conducts entropy decoding, AC/DC coefficient decoding, inverse DC prediction and inverse quantization on the image 1 and image 2 to be synthesized to obtain the DCT coefficients.

In block S2, the DCT coefficients are synthesized according to the image stitching mode.

The DCT coefficients here are the inversely quantized DC coefficients and AC coefficients in block S1. Each pixel block includes a DC coefficient and 63 AC coefficients. According to the JPEG raster scan standard, ordinal positions of pixel blocks of image 1 and image 2 have been changed after stitching. In the horizontal stitching mode as shown in the FIG 6b, the first line of image 2 becomes the second half of the first line of the synthesized image, and the first line of image 1 becomes the first half of the first line of the synthesized image; etc. The first column of image 2 becomes the k + 1 column of the synthesized image, and the second column of image 2 becomes the k + 2 column of the synthesized image, and so on. The previous pixel block adjacent to each pixel block in the first column of image 2 has changed. At the same time, in the first column of image 1, while the previous pixel block adjacent to the first pixel block has not changed, the previous pixel blocks adjacent to all the other pixel blocks have changed.

In the vertical stitching mode as shown in the FIG 6c, the first line of image 2 was joined after the last line of image 1. The previous pixel block adjacent to the first pixel block of image 2 in the synthesized image has changed. The previous pixel blocks adjacent to all the other pixel blocks are not changed.

This block S2 of synthesizing the DCT coefficients according to the image stitching mode rearranges the DC coefficients and AC coefficients of the pixel blocks in the image 1 and image 2 in the order of JPEG raster scan according to the image stitching mode. The stitching modes include the horizontal stitching mode as shown in FIG. 1a, which corresponds to the raster scan as shown in FIG. 6b; and also the vertical stitching mode as shown in FIG. 1b, which corresponds to the raster scan as shown in FIG. 6c.

After rearranged according to the JPEG raster scan order, the previous pixel blocks adjacent to some of the pixel blocks in the synthesis image have changed. Therefore, the encoding method of the corresponding DC coefficients according to differential pulse code modulation can be changed as well.

In block S3, the synthesized DCT coefficients are quantized and processed through DC prediction, AC/DC coefficient encoding and entropy encoding to form the bit stream of the synthesized image. After rearrangement, according to the new order of rearranged pixel blocks, quantization and DC prediction can be conducted correctly on the synthesized image. Then the AC/DC coefficient encoding and entropy encoding can be conducted and according to the raster scan order, the bit stream of a synthetic image can be formed to complete the process for synthesizing image.

It can be seen that in this disclosed example, when the image stitching is conducted, the original JPEG images are not fully decoded. The synthesis is also not performed in the YUV plane, but in the level of DCT coefficients. Compared with JPEG decoding standard, it does not need the IDCT in the decoding process and the DCT in the encoding process, and thus saves computing resources.

It should be noted that, in the Intelligent Transportation System (ITS), the image formats are generally identical. The header information of the JPEG image files is generally the same. During the process for synthesizing image, the header of an image file can be reserved as the header of the synthesis image, and the image height and width information in the header can be modified to the height and width information of the synthesis image.

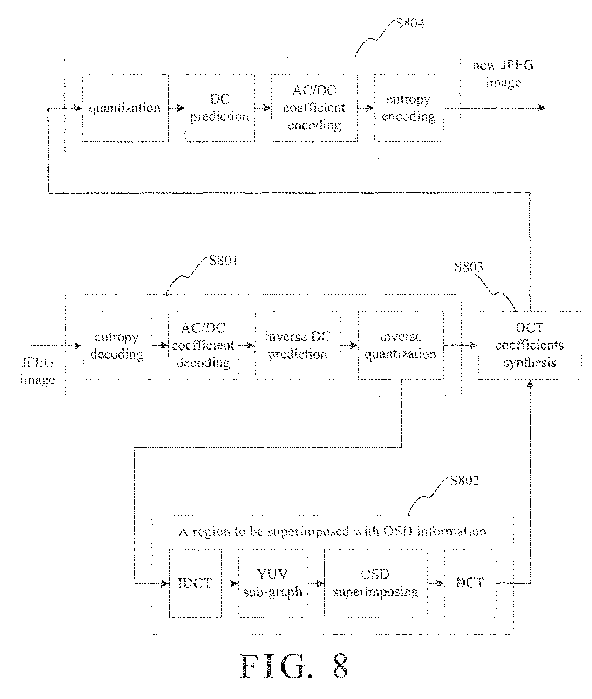

In the electronic police subsystem and the block port monitoring subsystem, in addition to image synthesizing, some OSD (On Screen Display) information may be required to add to the synthesized image, such as OSD information for improving results of intelligent recognition, OSD information of time or location, and so on. The existing technologies for superimposing the OSD information on images usually decode the JPEG images according to the standard decoding process, and superimpose the OSD information in the resulting YUV plane. After the superimposition, encoding is conducted according to the standard JPEG encoding process to obtain the new JPEG images with OSD information added. The present example is to offer a new method for superimposing OSD information to a JPEG image based on the principle of the above-mentioned method for synthesizing JPEG image, as shown in FIG. 8, which may include the following operations.

In block S801, the bit stream of the JPEG image to be superimposed with OSD information is decoded through entropy decoding, AC/DC coefficient decoding, and processed through inverse DC prediction and inverse quantization to obtain the DCT coefficients.

Compared with the existing technologies that decode the JPEG image to be superimposed with OSD information according to the standard JPEG encoding process, and superimpose the OSD information on the YUV plane, the present example processes the JPEG images to be superimposed with the OSD information only in the DCT coefficient plane.

In block S802, the DCT coefficient for a region of the image that is to be superimposed with the OSD information is extracted. The extracted DCT coefficients are transformed into YUV plane data by an IDCT. The YUV plane data are superimposed with the OSD information and the result data are then transformed by a DCT.

When the JPEG image is superimposed with the OSD information, the region of the JPEG image superimposed with the OSD information has clear coordinate marks, and thus has specific boundaries. The region is processed through entropy decoding, AC/DC coefficient decoding, inverse DC prediction and inverse quantization, and then transformed by an IDCT to complete the full JPEG decoding procedure and obtain resulting data in the YUV plane of the region. The OSD information is then superimposed on the plane YUV data of the region.

The present example conducts entropy decoding, AC/DC coefficient decoding, inverse DC prediction and inverse quantization on the JPEG image, and then only transforms the region of the image to be superimposed with the OSD information by an IDCT. In the YUV plane, the transformed region is superimposed with the OSD information and then is transformed back to DCT coefficients by the DCT. Apparently, only the region to be superimposed with the OSD information is transformed by IDCT and DCT, instead of conducting full JPEG decoding and encoding on the entire JPEG image. Therefore, the calculation cost is reduced.

It should be noted that each pixel block in the JPEG images is encoded in the raster scan order. Furthermore, the JPEG image file has a strict file format. The JPEG image file header contains the information of the height and width of image. When decoding a JPEG image, the header of the JPEG image file is first decoded to learn the height and width information of image. According to the JPEG bit stream standard format, the positions of each pixel block (including DC and AC position) and length of the each pixel block can be found in sequence. Therefore, the pixel blocks in the region to be superimposed with the OSD information can be determined according to their coordinates and thus can be processed directly. The following process will not be repeated again.

In block S803, the DCT coefficients superimposed with OSD information are synthesized with the DCT coefficients of non-superimposed region of the image.

In the previous block, the OSD information superimposition is completed, as well as the formation of a DCT coefficient of the region superimposed with the OSD information via the DCT. In this block, the DCT coefficients superimposed with OSD information and the DCT coefficients of non-superimposed region are synthesized. The relative positions of the DCT coefficient of each pixel block in the image have not changed after the region is superimposed with the OSD information. Thus, these DCT coefficients of the pixel blocks are arranged in the original position. The non-superimposed region refers to the region other than the region superimposed with the OSD information.

In block S804, the synthesized DCT coefficients are quantized and processed through DC prediction, AC/DC coefficient encoding and entropy encoding, to form the bit stream of the synthesized image.

It can be seen that the region to be superimposed with the OSD information is decoded by JPEG decoding to obtain a YUV sub-graph. After superimposing OSD information on the YUV sub-graph, the DCT is conducted again. With respect to the non-superimposed region, only entropy decoding, AC/DC coefficient decoding, inverse DC prediction and inverse quantization are conducted. Then the DCT coefficients of the region superimposed with the OSD information are synthesized with the DCT coefficients of the non-superimposed region. Finally, the remaining operations of the JPEG encoding process can be conducted on the synthesized DCT coefficients. The remaining operations include quantizing, DC prediction, AC/DC coefficient encoding and entropy encoding.

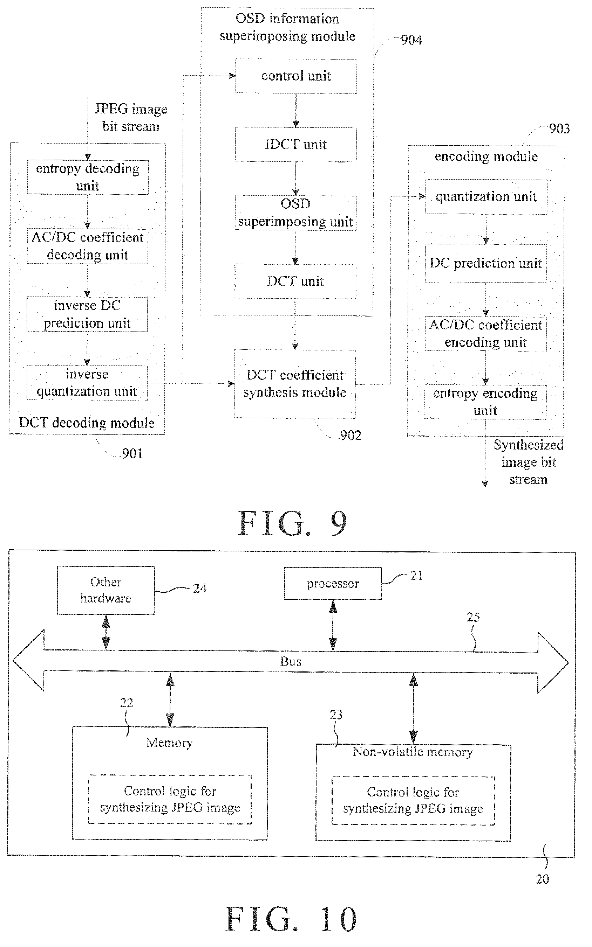

The disclosure also provides a device that utilizes the above method for synthesizing JPEG images to achieve JPEG image synthesis. As shown in FIG. 9, a device for synthesizing JPEG image may include the following modules.

A DCT decoding module 901 is used to perform entropy decoding, AC/DC coefficient decoding, inverse DC prediction and inverse quantization on the bit stream of JPEG image to be synthesized.

A DCT coefficient synthesis module 902 is used to synthesize the DCT coefficients according to a JPEG raster scan order.

An encoding module 903 is used to perform quantization, DC prediction, AC/DC coefficient encoding and entropy encoding on the synthesized DCT coefficients to form the synthesized JPEG bit stream.

Further, the DCT decoding module 901 also includes an entropy decoding unit, an AC/DC coefficient decoding unit, an inverse DC prediction unit and an inverse quantization unit, which perform the entropy decoding, AC/DC coefficient decoding, inverse DC prediction and inverse quantization, respectively, on the input JPEG bit stream according to the JPEG standard. The encoding module 903 also includes a quantization unit, a DC prediction unit, an AC/DC coefficient encoding unit and an entropy encoding unit, which, respectively, conduct the quantization, the DC prediction, the AC/DC coefficient encoding and entropy encoding to the DTC coefficients image according to the JPEG standard.

This disclosure also provides a device for superimposing the JPEG image with OSD information. The device includes the following modules.

A DCT decoding module 901 is used to perform entropy decoding, AC/DC coefficient decoding, inverse DC prediction and inverse quantization on the JPEG image bit stream to be superimposed with the OSD information, to obtain DCT coefficients.

An OSD information superimposing module 904 is used for extracting DCT coefficients of the region to be superimposed with OSD information, performing IDCT to obtain the YUV plane data, superimposing the OSD information on the YUV plane data and performing the DCT to obtain the DCT coefficients of the region.

A DCT coefficient synthesis module 902 is used to synthesize the DCT coefficients of the region superimposed with OSD information and the DCT coefficients of non-superimposed region.

An encoding module 903 is used to perform quantization, DC prediction, AC/DC coefficient encoding and entropy encoding on the synthesized DCT coefficients to form a bit stream of the synthesized image.

The OSD information superimposing module 904 extracts the DCT coefficients of the region to be superimposed with the OSD information from the DCT coefficients of the JPEG image according to the coordinate information of the region to be superimposed with the OSD information in the JPEG image.

The OSD information superimposing module 904 includes a control unit, an IDCT unit, an OSD superimposing unit and a DCT unit. The control unit extracts DCT coefficients of the pixel blocks in the region to be superimposed with the OSD information. The DCT coefficients are input into the IDCT unit to conduct the IDCT and the result is superimposed with the OSD information in the OSD superimposing unit, and finally converted by the DCT unit to the DCT coefficients image again.

FIG. 10 is a hardware block diagram of a device 20 for synthesizing JPEG images and/or for superimposing JPEG images with OSD information according to one example of the present disclosure. The hardware architecture shown in FIG. 10 includes a processor 21, memory 22, non-volatile memory 23 and other hardware 24. The processor 21, memory 22 and non-volatile memory 23 and other hardware 24 may communicate with each other via bus 25. According to one example, a plurality of machine readable instructions corresponding to a control logic for synthesizing JPEG images or superimposing JPEG images with OSD information may be stored in memory 22 and/or non-volatile memory 23.

In the device for synthesizing JPEG image, the computer instructions stored in the non-volatile memory 23, when executed by the processor, perform the following operations.

The JPEG bit stream of the first and the second images is decoded through entropy decoding and AC/DC coefficient decoding, and then processed by inverse DC prediction and inverse quantization to obtain the DCT coefficients.

The DCT coefficients are synthesized according to the image stitching mode.

The synthesized DCT coefficients are quantized and then processed through DC prediction, AC/DC coefficient encoding and entropy encoding to form the bit stream of the synthesized image.

The header of the first image or the second image is retained as the header of the final synthesized image. The height and width information of the images in the header are modified as the height and width information of the synthesized image.

In the device for superimposing the JPEG image with the OSD information, the computer instructions stored in the non-volatile memory 23, when executed by the processor, perform the following operations.

The bit stream of the JPEG image to be superimposed with OSD information is decoded through entropy decoding, AC/DC coefficient decoding, and processed through inverse DC prediction and inverse quantization to obtain the DCT coefficients.

The DCT coefficient for a region of the image that is to be superimposed with the OSD information is extracted.

The extracted DCT coefficient is transformed into YUV plane data by the IDCT. The YUV plane data are superimposed with the OSD information and the result data are then transformed by the DCT.

The DCT coefficients superimposed with OSD information are synthesized with the DCT coefficients of non-superimposition region of the image.

The synthesized DCT coefficients are quantized and processed through DC prediction, AC/DC coefficient encoding and entropy encoding, to form the bit stream of the synthesized image.

The above are only preferred examples of the present disclosure is not intended to limit the disclosure within the spirit and principles of the present disclosure, any changes made, equivalent replacement, or improvement in the protection of the present disclosure should contain within the range.

## Claims

1. A method for synthesizing JPEG images, the method comprising:
performing entropy decoding, alternating current (AC)/ direct current (DC) coefficient decoding, inverse DC prediction and inverse quantization on the bit streams of a first image and a second image in joint photographic experts group (JPEG) format to obtain the discrete cosine transform (DCT) coefficients;
synthesizing the DCT coefficients according to a image stitching mode; and
performing quantization, DC prediction, AC/DC coefficient encoding and entropy encoding on the synthesized DCT coefficients to form a bit stream of a synthesized image.

2. The method of claim 1 further comprising:
retaining the header of the first image or the second image as the header of the synthesized image, and
modifying the height and width information in the header of the synthesized image to the height and width information of the synthesized image.

3. The method of claim 2, wherein synthesizing the DCT coefficients according to the image stitching mode comprises:
arranging the DCT coefficients of the first image and the second image in the order of JPEG raster scan according to the image stitching mode.

4. The method of claim 3, wherein
the image stitching mode includes a vertical stitching mode and a horizontal stitching mode, and
in the vertical stitching mode, the DCT coefficients of the second image are arranged after the last row of the first image;
in the horizontal stitching mode, the first half of the n^{th} row of DCT coefficients of the synthesized image is the DCT coefficients of the n^{th} row of the first image, and the second half of the n^{th} row of the DCT coefficients of the synthesized image is the DCT coefficients of the n^{th} row of the second image.

5. A method for superimposing On Screen Display (OSD) information onto joint photographic experts group (JPEG) image, comprises:
processing the bit stream of a JPEG image to be superimposed with OSD information through entropy decoding, alternating current (AC)/ direct current (DC) coefficient decoding, inverse DC prediction and inverse quantization to obtain discrete cosine transform (DCT) coefficients;
extracting DCT coefficients of a region in the image that is to be superimposed with the OSD information,
transforming the extracted DCT coefficients into YUV plane data by an inverse discrete cosine transform (IDCT),
superimposing the OSD information onto the YUV plane data and transforming the result data by a DCT;
synthesizing the DCT coefficients superimposed with the OSD information with DCT coefficients of non-superimposed region of the image; and
performing quantization, DC prediction, AC/DC coefficient encoding and entropy encoding on the synthesized DCT coefficients to form a bit stream of a synthesized image.

6. The method of claim 5, wherein extracting the DCT coefficients of the region in the image that is to be superimposed with the OSD information comprises:
extracting the DCT coefficients of the region from DCT coefficients of the JPEG image based on coordinate information of the region in the image.

7. A device for synthesizing JPEG images, the device comprising:
a processor and non-volatile memory that stores machine readable instructions, wherein the machine readable instructions, when executed by the processor, cause the processor to:
perform entropy decoding, alternating current (AC)/ direct current (DC) coefficient decoding, inverse DC prediction and inverse quantization on the bit streams of a first image and a second image in joint photographic experts group (JPEG) format to obtain the discrete cosine transform (DCT) coefficients;
synthesize the DCT coefficients according to a image stitching mode; and
perform quantization, DC prediction, AC/DC coefficient encoding and entropy encoding on the synthesized DCT coefficients to form a bit stream of a synthesized image.

8. The device according to claim 7, wherein said machine readable instructions further cause the processor to:
retain the header of the first image or the second image as the header of the synthesized image, and
modify the height and width information in the header of the synthesized to the height and width information of the synthesized image.

9. The device according to claim 7, wherein when synthesizing the DCT coefficients according to the image stitching mode, said machine readable instructions further cause the processor to:
in the vertical stitching mode, arrange the DCT coefficients of the second image after the last row of the first image; and
in the horizontal stitching mode, use the DCT coefficients of the n^{th} row of the first image as the first half of the n^{th} row of DCT coefficients of the synthesized image, and use the DCT coefficients of the n^{th} row of the second image as the second half of the n^{th} row of the DCT coefficients of the synthesized image.

10. A device for superimposing On Screen Display (OSD) information onto joint photographic experts group (JPEG) image, the device comprising:
a processor and non-volatile memory that stores machine readable instructions, wherein the machine readable instructions, when executed by the processor, cause the processor to:
process the bit stream of a JPEG image to be superimposed with OSD information through entropy decoding, alternating current (AC)/ direct current (DC) coefficient decoding, inverse DC prediction and inverse quantization to obtain the discrete cosine transform (DCT) coefficients;
extract DCT coefficients of a region in the image that is to be superimposed with the OSD information,
transform the extracted DCT coefficients into YUV plane data by an inverse discrete cosine transform (IDCT),
superimpose the OSD information onto the YUV plane data and transform the result data by a DCT;
synthesize the DCT coefficients superimposed with the OSD information with DCT coefficients of non-superimposed region of the image; and
perform quantization, DC prediction, AC/DC coefficient encoding and entropy encoding on the synthesized DCT coefficients to form a bit stream of a synthesized image.

11. The device according to claim 10, wherein when extracting the DCT coefficients of the region in the image that is to be superimposed with the OSD information, said machine readable instructions further cause the processor to:
extract the DCT coefficients of the region from DCT coefficients of the JPEG image based on coordinate information of the region in the image.
